# EUROPÄISCHE PATENTSCHRIFT

(11) **EP 3 966 930 B1**
(45) Veröffentlichungstag und Bekanntmachung des Hinweises auf die Patenterteilung: **17.07.2024**
(21) Anmeldenummer: 20751069.4
(22) Anmeldetag: 30.04.2020
(51) Int. Cl.: H02S 20/32

(54) **NACHFÜHRVORRICHTUNG**
TRACKING DEVICE
DISPOSITIF DE POURSUITE

(30) Priorität: 09.05.2019 DE 102019003426
(43) Veröffentlichungstag der Anmeldung: 16.03.2022
(73) Patentinhaber: Spork & Partners Engineering Consulting, 30900 Wedemark (DE)
(72) Erfinder: SPORK, Stefan, 30900 Wedemark (DE); SCHNITZER, Sandy, 17258 Feldberger Seenlandschaft (DE)
(74) Vertreter: ETL IP Patent- und Rechtsanwaltsgesellschaft mbH
(86) Internationale Anmeldenummer: PCT/DE2020/000093
(87) Internationale Veröffentlichungsnummer: WO 2020/224690

(56) Entgegenhaltungen:
- EP-A2- 2 154 449
- DE-U1- 202018 103 053
- US-A1- 2018 091 088
- US-A1- 2018 128 515

## Beschreibung

Die Erfindung betrifft eine Nachführvorrichtung für Solarmodule bezüglich des Sonnenstandes zur optimierten Stromerzeugung.

Nachführvorrichtungen sind bekannt. So beschreibt die WO 2016/192 766 A1 eine Nachführvorrichtung für Solarmodule mit einer Reihe von entlang einer Längsachse angeordneten Pfosten. An jedem Pfosten ist ein Querträger schwenkbar gelagert, wobei die Querträger um eine gemeinsame, parallel zur Längsachse verlaufende Schwenkachse schwenkbar sind. An jedem Querträger ist ein Zahnkranz befestigt, dessen Zahnung in Eingriff mit einem am jeweiligen Pfosten gelagerten, motorisch getriebenen Zahnrad ist. Auf den Querträgern sind parallel zur Schwenkachse verlaufende Längsträger für die Solarmodule angeordnet. Weiterhin ist eine Zwangsführung vorgesehen, welche eine Sicherung gegen eine transversale Verschiebung des Zahnrads relativ zum Zahnkranz ausbildet. Jedes Zahnrad ist seitlich am jeweiligen Pfosten gelagert und stirnseitig mit dem Zahnkranz im Eingriff.

Der Nachteil dieser und weiterer Nachführvorrichtungen besteht darin, dass eine direkte Kraft- und Drehzahlübertragung über die Zahnräder auf den Zahnkranz erfolgt mit der Folge, dass Wind- und Schneelasten durch die Antriebswelle und den motorischen Antrieb kompensiert werden müssen.

Die WO 2014/186 079 A2 beschreibt eine Nachführeinrichtung, bei der einseitig angeordnete Solarmodule auf einem Längsträger angeordnet sind, der drehbar um die eigene Achse auf Stützen gelagert ist. Als Antrieb für das Verstellen des Längsträgers dient ein Zahnkranzsegment, das stirnseitig mit einem Antriebszahnrad kämmt und dessen Endbereiche mit dem einen Längsträger verbunden sind.

Das Antriebszahnrad wird von einem zentralen Motor über eine rotierende Antriebsstange angetrieben, wobei die rotierende Bewegung der Antriebsstange über eine durch die Antriebszahnstange angetriebene Schnecke auf das Antriebszahnrad übertragen wird. Die Antriebsstange weist Gelenke zum Geländeausgleich auf.

Nachteilig ist hier, dass die gesamte Schwenkbewegung durch den einen Längsträger realisiert wird, der zusätzlich Träger der Solarmodulreihe ist. Das stellt hohe Anforderungen an die Lager des Längsträgers auf den Stützen. Ferner bedarf es eines Verbindungsträgers zwischen den Stützen zur Fixierung des Antriebes.

Aufgabe der Erfindung ist es, die notwendigen Kräfte zum Nachführen zu optimieren.

Gelöst wird diese Aufgabe mit den Merkmalen des Anspruches 1. Vorteilhafte Ausgestaltungen sind Gegenstand der Unteransprüche.

Bei einer Nachführvorrichtung für Solarmodule mit einer Reihe von entlang einer Längsachse angeordneten Pfosten, wobei an jedem Pfosten ein Querträger gelagert ist, wobei die Querträger Träger für die Solarmodule aufweisen und die Querträger um eine Schwenkachse schwenkbar sind,
in dem an jedem Querträger beidseitig der Schwenkachse ein Ende eines Bogensegmentes befestigt ist, das in Eingriff ist mit einem am jeweiligen Pfosten gelagerten, motorisch getriebenen Zahnradgetriebe, wobei
die Zahnradgetriebe mit einer gemeinsamen Welle gekoppelt sind, welche von einem zentralen Antrieb angetrieben ist, wird erfindungsgemäß vorgeschlagen, dass jedes Bogensegment seitlich und beabstandet Lochungen aufweist, in die die Zähne eines Antriebsrades des jeweiligen Zahnradgetriebes eingreifen.

Bevorzugt ist jedes Bogensegment auf der der Eingriffsseite gegenüberliegenden Seite durch einen Gegenhalter geführt.

Die Bogensegmente sind bevorzugt einem Halbkreis angenähert.

Im Vergleich zu Zahnrädern sind die Bogensegmente einfach herstellbar und dennoch stabil. Der Eingriff kann sehr einfach so ausgelegt werden, dass auch größere Verschmutzungen nicht zu Funktionsstörungen führen.

Ein möglichst reibungsreduzierter Eingriff der Zähne des Antriebsrades des Zahnradgetriebes in die Lochungen des Bogenelementes ist erreichbar, wenn die Welle des Antriebsrades unter einem spitzen Winkel (α) zum jeweiligen Pfosten verläuft.

Bei einer vorteilhaften Ausgestaltung ist vorgesehen, dass die Zahnradgetriebe selbsthemmend sind, derart, dass Antriebsmomente des zentralen Antriebs auf die Bogensegmente übertragen werden, während Kräfte und Momente von den Bogensegmenten kommend unmittelbar in die zugehörigen Pfosten geleitet werden. Durch die Verwendung von selbsthemmenden Zahnradgetrieben wird mit geringeren Momenten gearbeitet, so dass sich die Drehzahlen beim Nachführen erhöhen lassen.

Bevorzugt werden Zahnradgetriebe eingesetzt, die eingangsseitig eine Schnecke aufweisen, die von der Welle des zentralen Antriebs angetrieben werden.

Der zentrale Antrieb wird durch die Verarbeitung von Messergebnissen und/oder Vorprogrammierungen gesteuert.

Eine weitere vorteilhafte Ausgestaltung sieht vor, dass jeder Pfosten zumindest im Bereich des Schwenkbogens des Bogensegmentes aus zwei parallel verlaufenden miteinander unter Abstand verbundenen Streben besteht und zwischen den Streben das jeweilige Bogensegment verläuft. Die Bogensegmente können durch die Streben der jeweiligen Pfosten auf diese Weise seitlich geführt werden.

Die Schwenkachse der Querträger ist bevorzugt am Kopf des jeweiligen Pfostens angeordnet, damit die Solarmodule als geschlossene Fläche angeordnet werden können.

Weiterhin sind die Pfosten bevorzugt senkrecht angeordnet, wodurch die Parallelität der Bewegung der Bogensegmente gewährleistet ist.

Eine weitere vorteilhafte Ausgestaltung sieht vor, dass die Welle vom zentralen Antrieb neben den Pfosten verläuft und über Gelenke zum Ausgleich von Geländeunebenheiten verfügt.

Natürlich ist es auch möglich, die Welle vom zentralen Antrieb durch die Pfosten zu führen und die Zahnradgetriebe seitlich an den Pfosten anzuordnen. Diese Lösungsalternative geht allerdings einher mit einer Pfostenquerschnittsschwächung.

Bevorzugt ist die Welle vom Antrieb steckbar mit Formschluss mit den Zahnradgetrieben verbunden.

Diese Maßnahmen lassen eine einfache Montage zu und sind wartungsfreundlich.

Weiter reduziert sich der Montageaufwand erheblich, wenn die Anordnung des Bogensegmentes und des zugeordneten Zahnradgetriebes für alle Pfosten identisch ausgebildet ist.

Die Träger für die Solarmodule sind der gewünschten Anordnung der Solarmodule angepasst, z.B. vier Module quer übereinander bzw. zwei Module hochkant.

Bei der Nutzung von bifazialen Solarmodulen ist es vorteilhaft, wenn durch eine entsprechende Auslegung der Träger die Solarmodule zwischen den Trägern angeordnet werden können. Die Verschattung der Rückseite der Solarmodule durch die Träger wird so verhindert.

Ausführungsbeispiele der Erfindung sollen anhand der Zeichnungen erläutert werden. Es zeigen:
- Fig. 1: das System,
- Fig. 2: zwei benachbarte Pfosten,
- Fig. 3: ein Pfosten mit Querträger,
- Fig. 4: das Zahnradgetriebe im Eingriff und
- Fig. 5: den Winkel α.

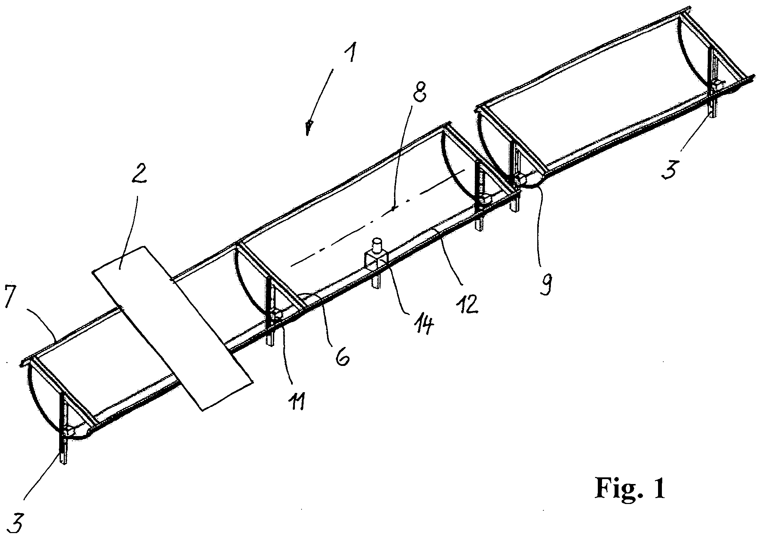

Fig. 1 zeigt eine erfindungsgemäße Nachführvorrichtung 1 für Solarmodule 2 mit einer Reihe von entlang einer Längsachse senkrecht angeordneten Pfosten 3.

An jedem Pfosten 3 ist kopfseitig ein Querträger 6 um die Schwenkachse 8 schwenkbar gelagert, in dem an jedem Querträger 6 beidseitig der Schwenkachse 8 ein Ende eines Bogensegmentes 9 befestigt ist, dessen seitliche Lochungen 10 in Eingriff sind mit einem am jeweiligen Pfosten 3 gelagerten, motorisch getriebenen Zahnradgetriebe 11.

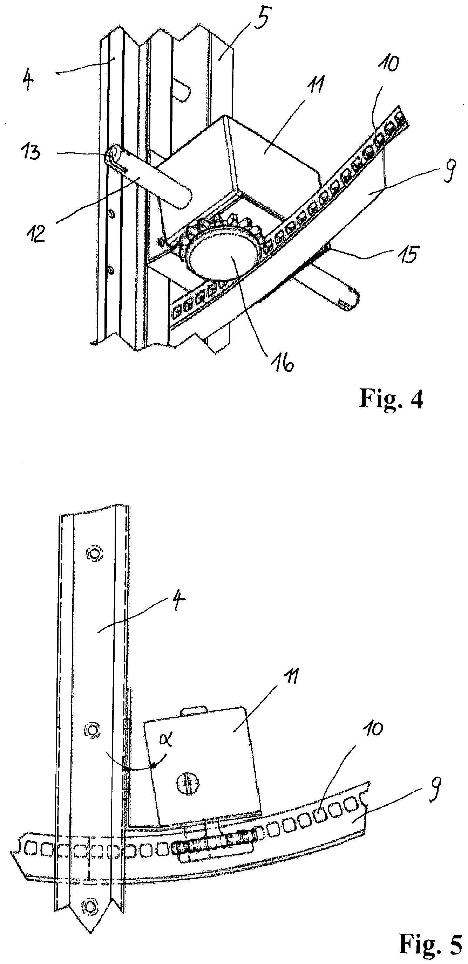

Die Lochungen 10 bestehen hier aus nebeneinander im Umfangbereich der Bogensegmentes 9 angeordneten seitlichen Öffnungen, in die die Zähne des Antriebsrades 16 des Zahnradgetriebes 11 eingreifen (vgl. Fig. 4).

Die Zahnradgetriebe 11 sind über eine gemeinsame Welle 12 gekoppelt, welche von dem zentralen Antrieb 14 angetrieben ist.

Die Welle 12 verläuft neben den Pfosten 3, der Längsachse folgend, und verfügt über Gelenke 13 zum Ausgleich von Geländeunebenheiten. Dabei ist die Welle 12 steckbar mit Formschluss mit den Zahnradgetrieben 11 verbunden.

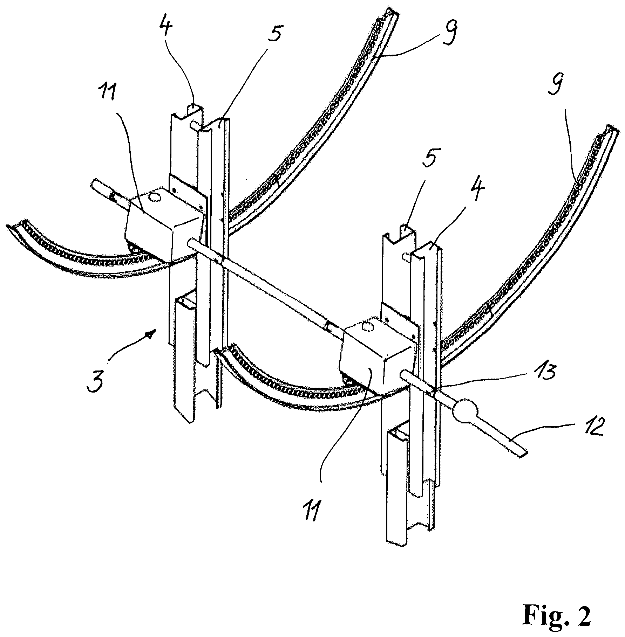

Fig. 2 zeigt in einer vergrößerten Darstellung zwei Pfosten 3, die zumindest im Bereich des Schwenkbogens des Bogensegmentes 9 aus zwei parallel verlaufenden miteinander unter Abstand verbundenen Streben 4, 5 bestehen. Die Bogensegmente 9 verlaufen zwischen den Streben 4, 5 und werden durch die Streben 4, 5 seitlich geführt. Die Zahnradgetriebe 11 zum Antrieb der Bogensegmente 9 sind über eine gemeinsame Welle 12 gekoppelt.

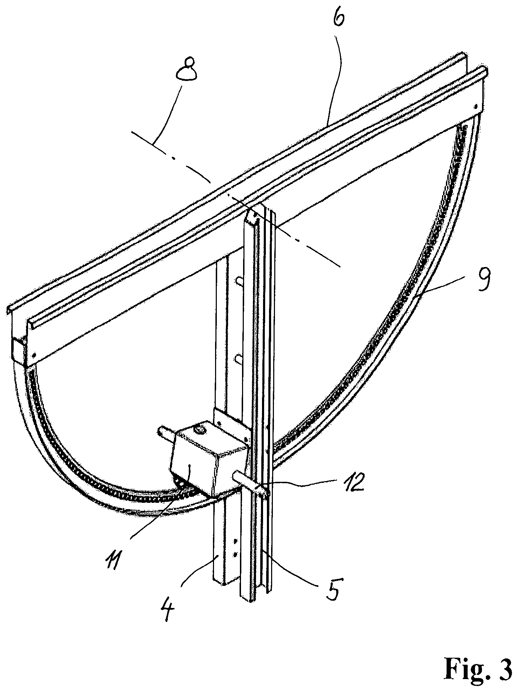

Fig. 3 zeigt einen Pfosten 3 mit einem kopfseitig um die Schwenkachse 8 schwenkbar gelagerten Querträger 6. Am Querträger 6 ist beidseitig der Schwenkachse 8 ein Ende des Bogensegmentes 9 befestigt, dessen Lochung 10 in Eingriff ist mit einem am jeweiligen Pfosten 3 gelagerten, motorisch getriebenen Antriebsrades 16 des Zahnradgetriebes 11.

In Fig. 4 und Fig. 5 ist der Antrieb des Bogensegmentes 9 im Detail dargestellt. Die Zähne des Antriebsrades 16 des Zahnradgetriebes 11 kämmen mit den Lochungen 10 des Bogensegmentes 9, wobei jedes Bogensegment 9 auf der der Eingriffsseite gegenüberliegenden Seite durch einen Gegenhalter 15 geführt ist .

Das Zahnradgetriebe 11 ist selbsthemmend, derart, dass Bewegungen des Bogensegmentes 9, resultierend z.B. aus Windlasten nicht auf die Welle 12 übertragbar sind. Dazu weist das Zahnradgetriebe 11 eingangsseitig eine Schnecke auf, die von der Welle 12 angetrieben die Drehbewegung auf das Antriebsrad 16 überträgt, dessen Welle unter einem spitzen Winkel (α) zum Pfosten 3 angeordnet ist.

Die vorgeschlagene Nachführvorrichtung vereint in sich Montagefreundlichkeit, die Einsatzmöglichkeit auch auf Flächen mit einem wechselnden Oberflächenprofil, hohe statische und dynamische Stabilität und Sicherheit sowie eine kostengünstige Herstellung. So können als durchgehende Reihe mit einem Pfostenabstand von ca. 8 Metern Längen bis zu 100 Meter realisiert werden.

### Bezugszeichenliste

- 1: Nachführeinrichtung
- 2: Solarmodule
- 3: Pfosten
- 4: Strebe des Pfostens
- 5: Strebe des Pfostens
- 6: Querträger
- 7: Träger für Solarmodule
- 8: Schwenkachse für Querträger
- 9: Bogensegment
- 10: Lochungen des Bogensegmentes
- 11: Zahnradgetriebe
- 12: Welle des zentralen Antriebs
- 13: Gelenk der Welle
- 14: Zentraler Antrieb
- 15: Gegenhalter
- 16: Antriebsrad des Zahnradgetriebes

## Patentansprüche

1. Nachführvorrichtung (1) für Solarmodule (2) mit einer Reihe von entlang einer Längsachse angeordneten Pfosten (3), wobei an jedem Pfosten (3) ein Querträger (6) gelagert ist, wobei die Querträger (6) Träger (7) für die Solarmodule (2) aufweisen und die Querträger (6) um eine Schwenkachse (8) schwenkbar sind, in dem an jedem Querträger (6) beidseitig der Schwenkachse (8) ein Ende eines Bogensegmentes (9) befestigt ist, das in Eingriff ist mit einem am jeweiligen Pfosten (3) gelagerten, motorisch getriebenen Zahnradgetriebe (11), wobei die Zahnradgetriebe (11) mit einer gemeinsamen Welle (12) gekoppelt sind, welche von einem zentralen Antrieb (14) angetrieben ist, **dadurch gekennzeichnet, dass**
jedes Bogensegment (9) seitlich und beabstandet Lochungen (10) aufweist, in die die Zähne eines Antriebsrades (16) des jeweiligen Zahnradgetriebes (11) eingreifen.

2. Nachführvorrichtung nach Anspruch 1, **dadurch gekennzeichnet, dass**
jedes Bogensegment (9) auf der der Eingriffsseite gegenüberliegenden Seite durch einen Gegenhalter (15) geführt ist.

3. Nachführvorrichtung nach Anspruch 1 oder 2, **dadurch gekennzeichnet, dass**
die Zahnradgetriebe (11) selbsthemmend sind, derart, dass Antriebsmomente des zentralen Antriebs (14) auf die Bogensegmente (9) übertragen werden, während Kräfte und Momente von den Bogensegmenten (9) kommend unmittelbar in die zugehörigen Pfosten (3) geleitet werden.

4. Nachführvorrichtung nach einem er Ansprüche 1 bis 3, **dadurch gekennzeichnet, dass**
jeder Pfosten (3) zumindest im Bereich des Schwenkbogens des Bogensegmentes (9) aus zwei parallel verlaufenden miteinander unter Abstand verbundenen Streben (4, 5) besteht und zwischen den Streben (4, 5) das Bogensegment (9) verläuft.

5. Nachführvorrichtung nach Anspruch 4, **dadurch gekennzeichnet, dass**
die Bogensegmente (9) durch die Streben (4, 5) der jeweiligen Pfosten (3) seitlich geführt sind .

6. Nachführvorrichtung nach einem der Ansprüche 1 bis 5, **dadurch gekennzeichnet, dass**
die Schwenkachse (8) der Querträger (6) am Kopf des jeweiligen Pfostens (3) angeordnet ist.

7. Nachführvorrichtung nach einem der Ansprüche 1 bis 6, **dadurch gekennzeichnet, dass**
die Pfosten (3) senkrecht angeordnet sind .

8. Nachführvorrichtung nach einem der Ansprüche 1 bis 7, **dadurch gekennzeichnet, dass**
die Welle (12) neben den Pfosten (3), der Längsachse folgend, verläuft und über Gelenke (13) zum Ausgleich von Geländeunebenheiten verfügt.

9. Nachführvorrichtung nach einem der Ansprüche 1 bis 7, **dadurch gekennzeichnet, dass**
die Welle (12) vom zentralen Antrieb (14) durch die Pfosten (3) geführt ist und über Gelenke (13) zum Ausgleich von Geländeunebenheiten verfügt.

10. Nachführvorrichtung nach Anspruch 8 oder 9, **dadurch gekennzeichnet, dass**
die Welle (12) steckbar mit Formschluss mit den Zahnradgetrieben (11) verbunden ist.

11. Nachführvorrichtung nach einem der Ansprüche 1 bis 10, **dadurch gekennzeichnet, dass**
die Anordnung des Bogensegmentes (9) und des zugeordneten Zahnradgetriebes (11) für alle Pfosten (3) in gleicher Weise ausgebildet ist.

12. Nachführvorrichtung nach einem der Ansprüche 1 bis 11, **dadurch gekennzeichnet, dass**
das Zahnradgetriebe (11) eingangsseitig eine Schnecke aufweist, die von der Welle (12) angetrieben ist.

13. Nachführvorrichtung nach einem der vorgenannten Ansprüche, **dadurch gekennzeichnet, dass**
die Welle des Antriebsrades (16) unter einem spitzen Winkel (α) zum jeweiligen Pfosten (3) verläuft.

14. Nachführvorrichtung nach einem der Ansprüche 1 bis 13, **dadurch gekennzeichnet, dass**
die Solarmodule (2) zwischen den Trägern (7) der Solarmodule (2) und vorzugsweise auch zwischen den Querträgern (6) angeordnet sind.

## Claims

1. A tracking device (1) for solar modules (2) having a series of posts (3) arranged along a longitudinal axis, a transverse support (6) being mounted on each post (3), the transverse supports (6) comprising supports (7) for the solar modules (2), the transverse supports (6) being pivotable about a pivot axis (8) by an end of a curved segment (9) being attached to each transverse support (6) on both sides of the pivot axis (8), said curved segment being engaged with a motor-driven toothed gearing (11) mounted on the particular post (3), the toothed gearing (11) being coupled to a common shaft (12) which is driven by a central drive (14), **characterized in that**
each curved segment (9) comprises perforations (10) laterally and in a manner spaced apart from one another, the teeth of a drive gear (16) of the particular toothed gearing (11) engaging in said perforations.

2. The tracking device according to Claim 1, **characterized in that**
each curved segment (9) is guided by a counter-holder (15) on the side opposite the engagement side.

3. The tracking device according to Claim 1 or 2, **characterized in that**
the toothed gearings (11) are self-locking, in such a way that
drive torques of the central drive (14) are transferred to the curved segments (9), while forces and torques from the curved segments (9) are directed directly into the associated posts (3).

4. The tracking device according to any one of Claims 1 to 3, **characterized in that**
at least in the region of the pivot arc of the curved segment (9), each post (3) consists of two parallel-extending struts (4, 5) that are interconnected at a distance from one another, the curved segment (9) extending between the struts (4, 5).

5. The tracking device according to Claim 4, **characterized in that**
each curved segment (9) is guided laterally through the struts (4, 5) of the particular post (3).

6. The tracking device according to any one of Claims 1 to 5, **characterized in that**
the pivot axis (8) of the transverse supports (6) is located at the tops of the respective posts (3).

7. The tracking device according to any one of Claims 1 to 6, **characterized in that**
the posts (3) are arranged so as to be vertical.

8. The tracking device according to any one of Claims 1 to 7, **characterized in that**
the shaft (12) extends adjacent to the posts (3), following the longitudinal axis, and has joints (13) for compensating for uneven terrain.

9. The tracking device according to any one of Claims 1 to 7, **characterized in that**
the shaft (12) of the central drive (14) is guided through the posts (3) and has joints (13) for compensating for uneven terrain.

10. The tracking device according to Claim 8 or 9, **characterized in that**
the shaft (12) is interlockingly connected to the toothed gearings (11) by insertion.

11. The tracking device according to any one of Claims 1 to 10,
**characterized in that**
the arrangement of the curved segment (9) and the associated toothed gearing (11) is the same for all posts (3) .

12. The tracking device according to any one of Claims 1 to 11, **characterized in that**
on the input side, the toothed gearing (11) has a worm screw that is driven by the shaft (12).

13. The tracking device according to any one of the preceding claims, **characterized in that**
the shaft of the drive gear (16) extends at an acute angle (α) to the particular post (3).

14. The tracking device according to any one of Claims 1 to 13, **characterized in that**
the solar modules (2) are arranged between the supports (7) of the solar modules (2) and preferably also between the transverse supports (6).

## Revendications

1. Dispositif de poursuite (1) pour modules solaires (2) avec une série de montants (3) disposés le long d'un axe longitudinal, dans lequel sur chaque montant (3) une traverse (6) est montée, les traverses (6) présentant des supports (7) pour les modules solaires (2) et les traverses (6) pouvant pivoter autour d'un axe de pivotement (8), où sur chaque traverse (6) est fixée de chaque côté de l'axe de pivotement (8) une extrémité d'un segment d'arc (9) qui est en prise avec une transmission à engrenages motorisée (11) montée sur le montant respectif (3), dans lequel les transmissions à engrenages (11) sont couplées à un arbre commun (12) qui est entraîné par un entraînement central (14), **caractérisé en ce que** chaque segment d'arc (9) présente des trous latéraux et distants dans lesquels les dents d'une roue motrice (16) de la transmission à engrenages respective (11) s'engrènent.

2. Dispositif de poursuite selon la revendication 1, **caractérisé en ce que**
chaque segment d'arc (9) est guidé par un contre-appui (15) sur le côté opposé au côté d'engrènement.

3. Dispositif de poursuite selon la revendication 1 ou 2, **caractérisé en ce que**
les transmissions à engrenages (11) sont à blocage automatique de telle sorte que les couples d'entraînement de l'entraînement central (14) sont transmis aux segments d'arc (9) tandis que des forces et couples en provenance des segments d'arc (9) sont dirigés directement dans les montants correspondants (3).

4. Dispositif de poursuite selon l'une quelconque des revendications 1 à 3, **caractérisé en ce que**
chaque montant (3) est composé au moins au niveau de l'arc de pivotement du segment d'arc (9) de deux étais (4, 5) qui s'étendent parallèlement et sont reliés l'un à l'autre à une certaine distance et, entre les étais (4, 5), s'étend le segment d'arc (9).

5. Dispositif de poursuite selon la revendication 4, **caractérisé en ce que**
les segments d'arc (9) sont guidés latéralement par les étais (4, 5) des montants respectifs (3).

6. Dispositif de poursuite selon l'une quelconque des revendications 1 à 5, **caractérisé en ce que**
l'axe de pivotement (8) de la traverse (6) est disposé au niveau de la tête du montant respectif (3).

7. Dispositif de poursuite selon l'une quelconque des revendications 1 à 6, **caractérisé en ce que** les montants (3) sont disposés verticalement.

8. Dispositif de poursuite selon l'une quelconque des revendications 1 à 7, **caractérisé en ce que**
l'arbre (12) s'étend à côté du montant (3), suivant l'axe longitudinal, et dispose d'articulations (13) pour compenser les inégalités de terrain.

9. Dispositif de poursuite selon l'une quelconque des revendications 1 à 7, **caractérisé en ce que**
l'arbre (12) est guidé par l'entraînement central (14) à travers les montants (3) et dispose d'articulations (13) pour compenser les inégalités de terrain.

10. Dispositif de poursuite selon la revendication 8 ou 9, **caractérisé en ce que**
l'arbre (12) est relié par complémentarité de forme de manière enfichable aux transmissions à engrenages (11).

11. Dispositif de poursuite selon l'une quelconque des revendications 1 à 10, **caractérisé en ce que** l'agencement du segment d'arc (9) et de la transmission à engrenages (11) associée est réalisé de la même manière pour tous les montants (3).

12. Dispositif de poursuite selon l'une quelconque des revendications 1 à 11, **caractérisé en ce que**
la transmission à engrenages (11) présente côté entrée une vis sans fin qui est entraînée par l'arbre (12).

13. Dispositif de poursuite selon l'une quelconque des revendications précédentes, **caractérisé en ce que** l'arbre de la roue motrice (16) s'étend à angle aigu (α) par rapport au montant respectif (3).

14. Dispositif de poursuite selon l'une quelconque des revendications 1 à 13, **caractérisé en ce que**
les modules solaires (2) sont disposés entre les supports (7) des modules solaires (2) et de préférence également entre les traverses (6).
